# EUROPÄISCHE PATENTANMELDUNG

(11) **EP 0 819 457 A1**
(43) Veröffentlichungstag der Anmeldung: **21.01.1998**
(21) Anmeldenummer: 97890126.2
(22) Anmeldetag: 08.07.1997
(51) Int. Cl.: B01D 24/26

(54) **Verfahren und Vorrichtung zur Filtration von Abwässern**

(30) Priorität: 09.07.1996 AT 1211/96
(71) Anmelder: Kosatko, Norbert, 1210 Wien (AT)
(72) Erfinder: Kosatko, Norbert, 1210 Wien (AT)
(74) Vertreter: Miksovsky, Alexander, Dipl.-Ing.

(57) **Zusammenfassung**

Bei einem Verfahren und einer Vorrichtung zur mechanischen und adsorptiven Reinigung und gegebenenfalls Rückgewinnung von Abwässern, insbesondere Dachflächenwässern oder Regenwasser, wobei einer Abscheidungsstufe zum Abscheiden von Feststoffen, beispielsweise einem Absetzbecken (1), eine tiefer liegende Filter- und/oder Reinigungsstufe nachgeschaltet ist, wobei die Filter- und/oder Reinigungsstufe von einem im wesentlichen vertikal verlaufenden Reinigungsbehälter (13) gebildet ist, welcher in seinem Inneren wenigstens zwei voneinander getrennte Reinigungs- und/oder Filtereinrichtungen aufweist, ist vorgesehen, daß der insbesondere in einem Sickerschacht (9) oder dgl. angeordnete Reinigungsbehälter (13) in seinem Bodenbereich eine Zuführöffnung für das zu reinigende Abwasser und in seinem oberen Bereich eine Abzugsöffnung für das gereinigte Abwasser aufweist, wobei eine Reinigung der zu behandelnden Abwässer durch ein Durchströmen der Reinigungs- und/oder Filterstufe entgegen der Schwerkraft erfolgt.

## Beschreibung

Die vorliegende Erfindung bezieht sich auf ein Verfahren zur mechanischen und adsorptiven Reinigung und gegebenenfalls Rückgewinnung von Abwässern, insbesondere Dachflächenwässern oder Regenwasser, wobei nach einem Abscheiden von Feststoffen in einer tiefer liegenden Filter- und/oder Reinigungsstufe eine Reinigung von Abwässern vorgenommen wird. Die Erfindung bezieht sich weiters auf eine Vorrichtung zur mechanischen und adsorptiven Reinigung und gegebenenfalls Rückgewinnung von Abwässern, insbesondere Dachflächenwässern oder Regenwasser, wobei einer Abscheidungsstufe zum Abscheiden von Feststoffen, beispielsweise einem Absetzbecken, eine tiefer liegende Filter- und/oder Reinigungsstufe nachgeschaltet ist, wobei die Filter- und/oder Reinigungsstufe von einem im wesentlichen vertikal verlaufenden Reinigungsbehälter gebildet ist, welcher in seinem Inneren wenigstens zwei voneinander getrennte Reinigungs- und/oder Filtereinrichtungen aufweist.

Es ist vielfach bekannt, daß Abwässer, insbesondere Dachflächenwässern oder Regenwasser, erheblich verunreinigt sein können, wobei im besonderen auf die fallweise hohen Keimzahlen und Schwermetallgehalte sowie andere unerwünschte und/ oder toxische Verunreinigungen hingewiesen wird. Inbesondere Schwermetalle sind weit verbreitet und verbleiben über lange Zeit im Boden, wobei beispielsweise in Siedlungsgebieten hohe Schwermetallgehalte im Boden gemessen werden können, wenn derartige Abwässer ohne Reinigungsmöglichkeit dem Versickern bzw. der Verrieselung zugeführt werden. Für den Fall einer Zuführung derartiger Abwässer in Kläranlagen verbleiben die Schwermetalle beispielsweise im Klärschlamm, der unter Umständen in der Landwirtschaft verwertet wird, wodurch wiederum eine Anlagerung derartiger Verunreinigungen bzw. giftiger Bestandteile in dem Boden erfolgt und in weiterer Folge unter Umständen in das Grundwasser gelangt. Die Verunreinigung von Dachflächenwässern oder Regenwasser läßt sich im Fall von Dachflächenwässern beispielsweise auf atmosphärische Verunreinigungen sowie auf Materialien der Dachflächen zurückführen. Derartige atmosphärische Verunreinigungen können beispielsweise aus Stäuben, Gasen, insbesondere Emissionen von häuslichen Herden oder industriellen Feuerungsanlagen, bestehen, wobei darüberhinaus, wie oben erwähnt, auftretende, hohe Keimzahlen beispielsweise durch Tierexkremente, Bak¥terien oder dgl. bedingt sein können. Die Ablösung von Materialien von Dachflächen, wie beispielsweise von den bei Dachflächen häufig angewandten Kupfer- oder Zink-Blechen oder verzinkten Blechen, erfolgt hiebei insbesondere durch eine Korrosion derselben durch das überwiegend saure Niederschlagswasser, wobei insbesondere in dichtbesiedelten Gebieten mit einer entsprechenden Anreicherung mit derartigen Verunreinigungen gerechnet werden muß.

Es wird daher vielfach darauf abgezielt, vor einer Ableitung derartiger Abwässer in Kanalsysteme oder einer Versickerung zum Schutz nachgeschalteter Systeme oder des Bodens sowie des Grundwassers eine Reinigung derartiger Abwässer zu erzielen bzw. darüberhinaus eine Weiterverwendung derartiger Abwässer als Brauchwasser zu ermöglichen. Für eine Behandlung bzw. Reinigung von Abwässern, insbesondere Dachflächenwässern oder Regenwasser, sind hiebei bereits eine Vielzahl von Verfahren oder Anlagen bekannt geworden.

So betrifft beispielsweise die DE-OS 38 21 633 ein Verfahren und eine Einrichtung zur Filterung und Versickerung von Regenwasser, wobei verschmutzes Regenwasser durch ein Grobstoffe zurückhaltendes Filter geleitet wird, wo es weitgehend mechanisch gereinigt wird und über wasserdurchlässige Elemente in den aufnahmefähigen Untergrund gelangt. Es wird somit bei diesem bekannten Verfahren insbesondere auf eine Abscheidung von Feststoffen oder teilchenförmigen Verunreinigungen des Regenwassers abgezielt, während jedoch eine gezielte Reinigung bzw. Reduktion von schädlichen Verunreinigungen, welche sich in weiterer Folge im Untergrund ansammeln können, wie beispielsweise die oben erwähnten Schwermetallbestandteile oder Keime oder Nitrate, mit dieser bekannten Ausführungsform nicht möglich wird.

Weiters ist aus der CH-A 682 503 eine Vorrichtung zum Reinigen von aus Niederschlags- und/oder Ablaufwasser stammendem Ablaufwasser unter Abtrennung von Schmutz und Schmutzwasser von Teilreinwasser bekannt geworden, wobei ebenfalls aus Niederschlagswasser schmutzige, teilchenförmige Bestandteile abgetrennt werden sollen und das vorgereinigte, zumindest von Feststoffen relativ saubere Wasser beispielsweise als Nutzwasser direkt in Oberflächengewässer abgeführt wird, um Kläranlagen zu entlasten. Hiebei ist beispielsweise ein Schlammsack vorgesehen, in welchem stark verunreinigte Teilwassermengen sedimentieren, wobei diese bekannte Vorrichtung wiederum in erster Linie auf die Entfernung von Schmutzpartikeln bzw. Feststoffen aus dem Niederschlagswasser abzielt und eine Entfernung bzw. Abtrennung von Schwermetallen oder anderen schädlichen bzw. toxischen Verunreinigungen nicht ermöglicht.

Der DE-OS 42 09 429 ist beispielsweise eine Anlage zur Aufbereitung, Speicherung und Förderung von Regenwasser zur Nutzung als Brauchwasser und zur Regenwasserbehandlung zum Zweck der Versickerung oder Einleitung in einen Vorfluter zu entnehmen, wobei eine Reinigung durch eine schnelle Sedimentation, eine Tiefenfiltration und eine langsame Sedimentation erfolgen soll. Weiters sollen unterschiedliche Sedimentations- und Filterstufen verwendet werden, wobei auch beispielsweise waschbare und herausnehmbare Filterschüttungen vorgesehen sein soll.

Weiters ist beispielsweise der DE-OS 41 25 453 ein Verfahren und eine Einrichtung zum Sammeln und Reinigen von Regenwasser zu entnehmen, wobei insbesondere darauf abgezielt wird, durch entsprechende bauliche Vorrichtungen die Fließgeschwindigkeit des Regenwassers zu verlangsamen und dadurch wenigstens eine teilweise Absetzung bzw. Entfernung von Verschmutzungen oder Feststoffen bei entsprechend vergrößerter Verweilzeit zu erzielen.

Schließlich ist aus der DD-PS 245 214 eine Anlage zum Speichern, Absetzen und Versickerung von anfallendem Regenwasser zu entnehmen, wobei wiederum im wesentlichen auf eine Beseitigung von Feststoffen bzw. teilchenförmigen Verunreinigungen abgezielt wird.

Eine Vorrichtung der eingangs genannten Art ist beispielsweise der AT-B 385 750 zu entnehmen, wobei in einem Gehäuse mehrere in Trögen aufgenommene Filterschichten mit einer Körnung von maximal 5 mm aufgenommen sind und die Tröge jeweils hochgezogene Ränder mit Überlauföffnungen aufweisen. Die übereinander angeordneten Tröge mit den Filterschichten weisen hiebei in Strömungsrichtung im Sinne der Schwerkraft größere Abmessungen auf, sodaß aus einem Trog überströmendes, teilweise gereinigtes Wasser von dem darunterliegenden, jeweils größeren Trog aufgenommen wird.

Bei der Ausbildung gemäß der AT-B 391 125 ist in einem Gehäuse wiederum eine Mehrzahl von tassenförmigen Trögen mit darin aufgenommenen Filterschichten vorgesehen, wobei zwischen den einzelnen Trögen Luftzwischenräume vorgesehen sind und an die unterste Filterschicht eine Füllung eines Sickerschachtes anschließt, wodurch auf eine verbesserte Abführung des gereinigten Wassers abgezielt wird.

Darüberhinaus ist der DE-A 20 36 822 eine Ausbildung zu entnehmen, bei welcher insbesondere auf die Bereitstellung von Trinkwasser aus verseuchtem oder verschmutzem Wasser abgezielt wird, wobei diese bekannte Vorrichtung insbesondere für Katastrophenfälle vorgesehen ist und dementsprechend mit überaus aufwendigen Filtern, Steuerungen und Dichtungselementen ausgebildet ist.

Aufgrund der Tatsache, daß diese bekannten Vorrichtungen in Richtung der Schwerkraft durchströmt bzw. durchflossen werden, ergibt sich jedoch unmittelbar, daß eine einfache Regelung und Steuerung des Durchflusses bzw. der Verweildauer des zu reinigenden Abwassers nicht ohne weiteres möglich ist, da die Durchflußgeschwindigkeit im wesentlichen durch die in den einzelnen Filterelementen enthaltenen Materialien bestimmt ist.

Der AT-B 393 497 ist darüberhinaus ein Verfahren zur Behandlung von Abwasser zu entnehmen, wobei eine Filteranlage mit anderen Wasserreinigungsverfahren kombiniert wird.

Es ist insgesamt ersichtlich, daß die derzeit bekannten Filter- oder Reinigungsanlagen sich im wesentlichen darauf beschränken, teilchenförmige Verunreinigungen bzw. Feststoffe aus einem Abwasser, insbesondere Dachflächenwässern oder Regenwasser, beispielsweise durch Absetzen oder durch Filterung zu entfernen, wobei jedoch auf eine spezielle Reinigung oder Beseitigung von im Regenwasser mitgeführten bzw. teilweise gelösten Verunreinigungen, wie insbesondere Schwermetalle, Nitrate, Keime oder andere schädliche bzw. toxische Verunreinigungen, welche in weiterer Folge zu einer Belastung des Grundwassers bei einer Versickerung oder nachgeschalteter Kanalsysteme, insbesondere in Kläranlagen, führen, nicht abgezielt wird.

Die vorliegende Erfindung zielt nun darauf ab, ausgehend von einem Verfahren und einer Vorrichtung der eingangs genannten Art eine konstruktiv einfache und kostengünstig herstellbare Ausbildung zur biologischen Reinigung und gegebenenfalls Rückgewinnung von Abwässern zur Verfügung zu stellen, mit welcher auf kleinstem Raum eine zuverlässige und über lange Zeiträume stabile Reduktion von unerwünschten Verunreinigungen von derartigen Abwässern, insbesondere Dachflächenwässern oder Regenwasser, wie beispielsweise Schwermetallen, Nitraten oder anderen schädlichen bzw. toxischen Verunreinigungen, gelingt, um teilweise variierende Vorschriften für die Ableitung derartiger Abwässer entweder für eine nachgeschaltete Versickerung oder eine Einleitung in Kläranlagen ohne weiteres und für längere Zeiträume und im wesentlichen unabhängig von einer gegebenenfalls stark unterschiedlichen Anfallsmenge einhalten zu können. Weiters wird darauf abgezielt, eine Einrichtung zu schaffen, welche ohne weiteres in bestehenden Regenwassersammelanlagen oder Dachwasserabscheideanlagen bzw. in Kanalsystemen vorgeschaltete Sammeleinrichtungen eingesetzt werden kann und/oder auch leicht eine nachträgliche Ausrüstung einer bestehenden Anlage bzw. Gebäudeeinheit ermöglicht. Darüberhinaus soll die Reinigung und/oder Filterung ohne Zusätze von chemischen Reinigungssubstanzen erfolgen, welche nachträglich wiederum abgetrennt werden müßten, um eine Verunreinigung hiedurch zu vermeiden.

Zur Lösung dieser Aufgaben ist das erfindungsgemäße Verfahren ausgehend von einem Verfahren der eingangs genannten Art im wesentlichen dadurch gekennzeichnet, daß in der Filter- und/oder Reinigungsstufe die zu behandelnden Abwässer durch einen im wesentlichen vertikal angeordneten Reingungsbehälter entgegen der Schwerkraft hindurchgeleitet werden, wobei die Zuführmengen der zu behandelnden Abwässer insbesondere geregelt bzw. gesteuert wird. Durch die erfindungsgemäß vorgeschlagene Verfahrensweise eines Durchströmens einer Filter- und/oder Reinigungsstufe, welche einem Abscheidebehälter nachgeschaltet ist und tiefer als dieser angeordnet ist, entgegen der Schwerkraft wird insbesondere eine gleichmäßige Durchströmung der Filter- und/oder Reinigungsstufe über deren gesamten Querschnitt erzielbar und es kann selbsttätig und ohne Zuhilfenahme von Pumpvorrichtungen eine entsprechende Regelung der Durchtrittsgeschwindigkeit bzw. der Durchtrittsdauer erzielt werden. Erfindungsgemäß ist darüberhinaus bevorzugt vorgesehen, die Zuführmengen der behandelten Abwässer zu regeln bzw. zu steuern, wodurch eine weitere Anpassung an die Gegebenheiten gelingt.

Zur Lösung dieser Aufgaben ist darüberhinaus die erfindungsgemäße Vorrichtung ausgehend von einer Vorrichtung der eingangs genannten Art im wesentlichen dadurch gekennzeichnet, daß der insbesondere in einem Sickerschacht oder dgl. angeordnete Reinigungsbehälter in seinem Bodenbereich eine Zuführöffnung für das zu reinigende Abwasser und in seinem oberen Bereich eine Abzugsöffnung für das gereinigte Abwasser aufweist. Dadurch, daß die einer Abscheidungsstufe zum Abscheiden von Feststoffen, beispielsweise einem Absetzbecken, nachgeschaltete Filter- und/oder Reinigungsstufe in einem im wesentlichen vertikal verlaufenden Reinigungsbehälter vorgesehen ist, läßt sich eine platzsparende Konstruktion schaffen, welche besonders bevorzugt beispielsweise in einem Sickerschacht oder dgl. aufgenommen werden kann. Da im Inneren des Reinigungsbehälters wenigstens zwei voneinander getrennte Reinigungs- und/oder Filtereinrichtungen vorgesehen sind, wird eine zuverlässige Reduktion von Verunreinigungen der zu behandelnden Abwässer, insbesondere Dachflächenwässer oder Regenwasser, ermöglicht, wobei durch Vorsehen von wenigstens zwei voneinander getrennten und günstigerweise auch verschiedenen Reinigungs- und/oder Filtereinrichtungen gezielt spezielle Verunreinigungen bzw. Gruppen von Verunreinigungen ohne Zusatz von chemischen Reinigungssubstanzen entfernt werden können. Das erfindungsgemäße Vorsehen einer Durchströmung des im wesentlichen vertikal angeordneten Reinigungsbehälters von unten nach oben entgegen der Schwerkraft ermöglicht zusätzlich eine weitere einfache Abscheidung von gegebenenfalls noch verbliebenen Feststoffen bzw. teilchenförmigen Verunreinigungen, sodaß zusätzlich der Reinigungseffekt zur Abscheidung von Feststoffen aus dem Abwasser verbessert wird und gleichzeitig eine gleichmäßige Beschickung des Filterkörpers erfolgt und dadurch auch eine gleichmäßige Reinigungswirkung erzielt wird. Darüberhinaus wird durch die erfindungsgemäß vorgeschlagene Durchströmungsrichtung entgegen der Schwerkraft sichergestellt, daß eine gleichmäßige Durchströmung der Filter- bzw. Reinigungsstufen über deren gesamten Querschnitt erzielbar ist und somit eine gleichmäßige Nutzung des gesamten Filterquerschnittes vorgenommen wird.

Für eine besonders einfache Sammlung von abgeschiedenen Feststoffen bzw. teilchenförmigen Verunreinigungen ist hiebei erfindungsgemäß bevorzugt vorgesehen, daß im Bodenbereich des Reinigungsbehälters ein Schlammfang vorgesehen ist. Der Reinigungs- bzw. Abscheideeffekt für die Entfernung von Schwebstoffen oder im zu behandelnden Abwasser enthaltenen, teilchenförmigen Verunreinigungen wird hiebei dadurch unterstützt, daß im Bereich oberhalb des Schlammfanges eine wenigstens teilweise Umkehr der Strömungsrichtung des zu reinigenden Abwassers erfolgt, wie dies einer weiteren bevorzugten Ausführungsform der erfindungsgemäßen Vorrichtung entspricht. Für eine einfache Entleerung des Schlammfanges bei gegebenenfalls anfallenden, großen Mengen von festen bzw. teilchenförmigen Verunreinigungen wird in diesem Zusammenhang weiters bevorzugt vorgeschlagen, daß der Reinigungsbehälter in seinem Bodenbereich eine verschließbare Öffnung zur Entleerung und/oder zum Austausch des Schlammfanges aufweist.

Um eine Steuerung der Reinigungsleistung bzw. -wirkung der Filter- und/oder Reinigungsstufe zu erhalten bzw. um einen einfachen Austausch oder eine Wartung der Filter- und/oder Reinigungsstufe bei einfacher Trennung von vorgeschalteten Abscheidungsstufen zu ermöglichen, ist darüberhinaus bevorzugt vorgesehen, daß die Zuführöffnung mit einer Verschlußeinrichtung, beispielsweise einem Schieber oder Ventil, ausgebildet ist.

Für eine ordnungsgemäße und ausreichende Abscheidung von im Abwasser enthaltenen bzw. teilweise gelösten Verunreinigungen, wie beispielsweise Schwermetallen, Nitraten oder anderen unerwünschten bzw. toxischen Verunreinigungen, ist eine gewisse Mindestverweildauer im Inneren des die Filter- und/oder Reinigungsstufe bildenden Reinigungsbehälters günstig bzw. erforderlich, wobei dies in einfacher Weise durch entsprechende Wahl der Durchtrittsquerschnitte sowohl der Zuführ- und der Abzugsöffnung als auch der Dimensionierung des Reinigungsbehälters gelingt. Für eine Anpaßbarkeit an unterschiedliche Gegebenheiten wird darüberhinaus bevorzugt vorgeschlagen, daß der Durchtrittsquerschnitt der Zuführ- und/oder der Abzugsöffnung regulierbar bzw. veränderbar ausgebildet ist, wodurch eine baulich im wesentlichen unveränderte Konstruktion eines erfindungsgemäßen Reinigungsbehälters für unterschiedliche Einsatzzwecke adaptiert werden kann bzw. auf die vorgeschaltete Abscheidungsstufe sowie auf gegebenenfalls nachgeschaltete Einrichtungen entsprechend abgestimmt werden kann.

Für die Erzielung der teilweise gesetzlich vorgeschriebenen Mindestreinigungserfordernisse wird darüberhinaus bevorzugt vorgeschlagen, daß als Filter- und/oder Reinigungsmittel Kies, Adsorptionsmaterialien, wie beispielsweise Aktivkohle, und/oder Vliese, insbesondere hydrophobe Vliese, im Reinigungsbehälter enthalten sind, wobei durch entsprechende Kombination der erfindungsgemäß vorgeschlagenen Filter- und/ oder Reinigungsmittel eine Entfernung bzw. Adsorption einer großen Vielzahl unterschiedlichster, üblicherweise in den zu behandelnden Abwässern enthaltenen Verunreinigungen ermöglicht wird, sodaß die geforderte Wassergüte für einen weiteren Einsatz oder für eine Versickerung ohne weiteres erzielbar ist. Als Vliese werden erfindungsgemäß insbesondere hydrophobe Vliese eingesetzt, um in den zwischen aufeinanderfolgenden Reinigungszyklen in Abhängigkeit vom anfallenden Abwasser gegebenenfalls bestehenden, langen Zeiträumen zu verhindern, daß sich Flüssigkeit in den Vliesen ansammelt und beispielsweise durch Fäulnis oder Schimmelpilz eine Beeinträchtigung der Filterwirkung oder Zerstörung des Filtermaterials erfolgt.

Insbesondere zur Adsorption von metallischen Verunreinigungen wird erfindungsgemäß bevorzugt vorgeschlagen, daß Adsorptionsmaterial in Form von Matten oder in körniger Form, insbesondere mit in Durchströmungsrichtung abnehmender Korngröße, welche zwischen Adsorptionsmaterial, beinhaltend Matten oder Vliesschichten, eingebettet ist, als Filter- oder Reinigungsmittel eingesetzt ist. Bei Einsatz von Adsorptionsmaterial in körniger Form mit in Durchströmungsrichtung veränderlicher, insbesondere abnehmender Korngröße wird neben einem entsprechenden Reinigungs- bzw. Adsorptionseffekt insbesondere verhindert, daß zu Beginn des Filter- und/oder Reinigungsvorganges gegebenenfalls auch in größerer Menge enthaltene, teilchenförmige Verunreinigungen bei geringer Korngröße des Adsorptionsmaterials zu einem mechanischen Verstopfen des Filtermaterials führen. Für eine einfache Handhabung und Anordnung körnigen Adsorptionsmaterials wird hiebei erfindungsgemäß vorgeschlagen, diese zwischen Adsorptionsmaterial-haltigen Matten oder Vliesschichten anzuordnen.

Da beim Durchtritt des zu reinigenden Abwassers durch Adsorptionsfilter insbesondere bei Einsatz von Adsorptionsmaterial in körniger Form Adsorptionsmaterialteilchen mitgerissen werden können, welche zwar an sich unschädlich sind, jedoch eine Trübung bzw. Färbung des von Schadstoffen befreiten Abwassers mit sich bringen, wird darüberhinaus bevorzugt vorgeschlagen, daß einem Filter aus Adsorptionsmaterial in körniger Form wenigstens ein Sand- bzw. Kiesfilter nachgeschaltet ist. Durch ein derartiges nachgeschaltetes Kiesfilter können in einfacher Weise mitgerissene Adsorptionsmaterialteilchen aus dem Abwasser entfernt werden, sodaß neben einer entsprechenden Befreiung von Schadstoffen auch ein weitestgehend klares Abwasser zur Verfügung gestellt werden kann.

Für eine besonders einfache Beschickung bzw. Befüllung des die Reinigungs- und/oder Filterstufe bildenden Reinigungsbehälters mit Reinigungs- und/oder Filtermaterial wird darüberhinaus bevorzugt vorgeschlagen, daß die Reinigungs- und/oder Filtereinrichtungen von in den Reinigungsbehälter einsetzbaren, austauschbaren Einsätzen, welche Filter- und/oder Reinigungsmittel enthalten, gebildet sind. Durch Verwendung von derartigen austauschbaren Einsätzen, welche Filter- und/oder Reinigungsmittel enthalten, kann in Anpassung an die örtlichen Gegebenheiten eine entsprechende gewünschte Kombination von einzusetzenden Reinigungs- und/oder Filtermaterialien erzielt werden. Weiters läßt sich durch Vorsehen derartiger Einsätze ein einfacher Tausch von einzelnen Filter- und/oder Reinigungskomponenten erzielen, wobei insgesamt ein modulartiger Aufbau der gesamten Filter- und/oder Reinigungsstufen ermöglicht wird.

Gemäß einer besonders bevorzugten Ausführungsform für einen einfachen, modulartigen Aufbau der Filter- und/oder Reinigungsstufe wird hiebei besonders bevorzugt vorgeschlagen, daß die Einsätze von wenigstens an der Unterseite mit Sieben oder gelochten Platten ausgebildeten Einrichtungen gebildet sind, deren Außenkontur an die Innenkontur des Reinigungsbehälters angepaßt und abgedichtet ist und welche im Inneren wenigstens ein Filter- oder Reinigungsmittel enthalten. Derartige, bei Einsatz eines rohrförmigen Reinigungsbehälters im wesentlichen zylindrische Einsätze mit Sieben oder gelochten Platten an der Unterseite ermöglichen eine einfache und zuverlässige Aufnahme von entsprechendem Filter- und/ oder Reinigungsmaterial im Inneren derartiger Einsätze, wobei durch eine Anpassung der Außenkontur der Einsätze an die Innenkontur des Reinigungsbehälters für eine entsprechend dichtende Anordnung derselben im Inneren des Reinigungsbehälters Sorge getragen wird, sodaß das zu behandelnde Abwasser zuverlässig durch die verschiedenen Filter- und/oder Reinigungsstufen hindurchtritt, als auch eine entsprechend große Querschnittsfläche für die Behandlung des zu reinigenden Abwassers zur Verfügung gestellt wird.

Gemäß einer alternativen Ausführungsform für einen modularen Aufbau der Filter- und/oder Reinigungsstufe wird erfindungsgemäß vorgeschlagen, daß die Einsätze von ringförmigen Einrichtungen gebildet sind, welche ein in im Zentrum des Reinigungsbehälters verlaufendes Zutrittsrohr, welches der Zufuhr des zu reinigenden Abwassers in das Innere des Reinigungsbehälters dient, im wesentlichen konzentrisch umgeben und mit Durchtrittsöffnungen zum Durchleiten des Abwassers durch das im Inneren der Einsätze enthaltene Filter- oder Reinigungsmittel ausgebildet sind. Neben einer Durchströmung des Reinigungsbehälters entgegen der Schwerkraft von unten nach oben erfolgt bei dieser Ausführungsform zusätzlich eine Durchströmung des Reinigungsbehälters in radialer Richtung ausgehend von dem im wesentlichen mittig angeordneten Zuführrohr bei nachfolgendem, zusätzlichen, radialen Durchtritt durch die die Filter- und/oder Reinigungsmittel enthaltenden Einsätze. Bei dieser Ausführungsform kann hiebei im Bodenbereich des Reinigungsbehälters ein Schlammfang das Zuführrohr im wesentlichen ebenfalls konzentrisch umgeben.

Für einen einfachen Tausch der das Filter- und/oder Reinigungsmaterial enthaltenden Einsätze, welche insbesondere in feuchtem Zustand ein teilweise hohes Gewicht aufweisen können, wird darüberhinaus bevorzugt vorgeschlagen, daß die Einsätze an ihrer Oberseite mit Greifeinrichtungen, wie beispielsweise Griffen, Haken oder Ösen, ausgebildet sind, um auch Einsätze mit großem Volumen entsprechend leicht und sicher handhaben zu können.

Die Einsätze können beispielsweise aus entsprechenden Kunststoffmaterialien oder nicht-rostenden, metallischen Elementen gebildet sein und können aufgrund des modularen Aufbaues ohne weiteres mehrfach einsetzbar sein, während das in den Einsätzen ebenfalls enthaltene Filter- und/oder Reinigungsmaterial entweder entsprechend entsorgt werden muß oder einer Regeneration unterworfen werden kann. Für eine einfache Entnahme des in den Einsätzen enthaltenenen Filter- und/oder Reinigungsmaterials wird in diesem Zusammenhang vorgeschlagen, daß die Einsätze mit einem abnehmbaren Deckel und/oder einer Entnahmeöffnung für das darin enthaltene Filter- und/oder Reinigungsmittel ausgebildet sind, wie dies einer weiteren bevorzugten Ausführungsform der erfindungsgemäßen Vorrichtung entspricht. Es läßt sich somit bei einer zuverlässigen und sicheren Aufnahme des Filter- und/oder Reinigungsmaterials in den Einsätzen während der Verwendung in dem Reinigungsbehälter eine einfache Möglichkeit für die Entnahme des verbrachten bzw. verschmutzten Filter- und/oder Reinigungsmaterials erzielen.

Für eine einfache Befüllung des Reinigungsbehälters, insbesondere bei Verwendung von modularen Einsätzen, welche Filter- und/oder Reinigungsmaterial enthalten, ist darüberhinaus bevorzugt vorgesehen, daß der Reinigungsbehälter mit einer abnehmbaren Abdeckung versehen ist. Eine derartige abnehmbare Abdeckung stellt sicher, daß während des Betriebes eine gegebenenfalls mögliche Geruchsbelastung der Umwelt vermieden wird, während gleichzeitig nach Abnahme der Abdeckung ein einfacher Tausch oder Ersatz von im Reinigungsbehälter enthaltenem Filter- und/oder Reinigungsmaterial ermöglicht wird.

Um auch bei gegebenenfalls kurzfristig anfallenden, sehr großen Mengen von zu behandelndem Abwasser eine Überbelastung des Reinigungsbehälters und insbesondere einen zu raschen Durchtritt durch diesen oder eine Ableitung der zu reinigenden Abwässer unter Umgehung des Reinigungsbehälters mit Sicherheit zu vermeiden, wird darüberhinaus bevorzugt vorgeschlagen, daß der Reinigungsbehälter mit einem vorgeschalteten Pufferspeicher bzw. Absetzbecken gekoppelt ist. Für eine weitere Verbesserung des Abscheide- oder Reinigungseffektes ist darüberhinaus bevorzugt vorgesehen, daß eine Mehrzahl von Reinigungsbehältern hintereinander angeordnet ist.

Wie oben bereits angedeutet, gelingt es durch Einsatz der erfindungsgemäßen Vorrichtung, eine beträchtliche Reduktion der in den zu behandelnden Abwässern enthaltenen, unerwünschten Verunreinigungen, wie beispielsweise Schwermetallen, Nitraten und andere unerwünschten bzw. toxischen Schadstoffen, zu erzielen, wobei Stoffreduktionen von über 85 oder 90 % möglich sind, sodaß bestehende Vorschriften für eine weitere Verwendung der gereinigten Abwässer leicht eingehalten werden können. Es wird daher gemäß einer weiteren bevorzugten Ausführungsform vorgeschlagen, daß dem Reinigungsbehälter eine Versickerungsanlage, ein Kanal oder ein Brauchwasserspeicher nachgeschaltet ist.

Die Erfindung wird nachfolgend anhand von in den beiliegenden Zeichnungen schematisch dargestellten Ausführungsbeispielen der erfindungsgemäßen Vorrichtung zur Durchführung des erfindungsgemäßen Verfahrens näher erläutert. In diesen zeigen
Fig. 1 eine schematische Draufsicht auf eine Dachwasserabscheide- und Regenwasserrückgewinnungsanlage, in welcher eine erfindungsgemäße Vorrichtung zur biologischen Reinigung und/oder Rückgewinnung von Abwässern integriert ist;
Fig. 2 einen Schnitt nach der Linie II-II der Fig. 1, wobei Fig. 1 eine Ansicht in Richtung des Pfeiles I der Fig. 2 darstellt;
Fig. 3 in vergrößertem Maßstab einen Schnitt durch eine erste Ausführungsform einer erfindungsgemäßen Filter- und/ oder Reinigungsstufe mit modularen Einsätzen;
Fig. 4 in einer zu Fig. 3 ähnlichen Darstellung eine abgewandelte Ausführungsform einer erfindungsgemäßen Filter- und/oder Reinigungsstufe;
Fig. 5 in einer wiederum ähnlichen Darstellung einen Schnitt durch eine weitere abgewandelte Ausführungsform einer erfindungsgemäßen Filter- und/oder Reinigungsstufe;
Fig. 6 wiederum in ähnlicher Darstellung eine weitere abgewandelte Ausführungsform einer erfindungsgemäßen Filter- und/oder Reinigungsstufe; und
Fig. 7 eine weitere abgewandelte Ausführungsform einer erfindungsgemäßen Filter- und/oder Reinigungsstufe mit konzentrisch zu einer Zuführung angeordneten Einsätzen.

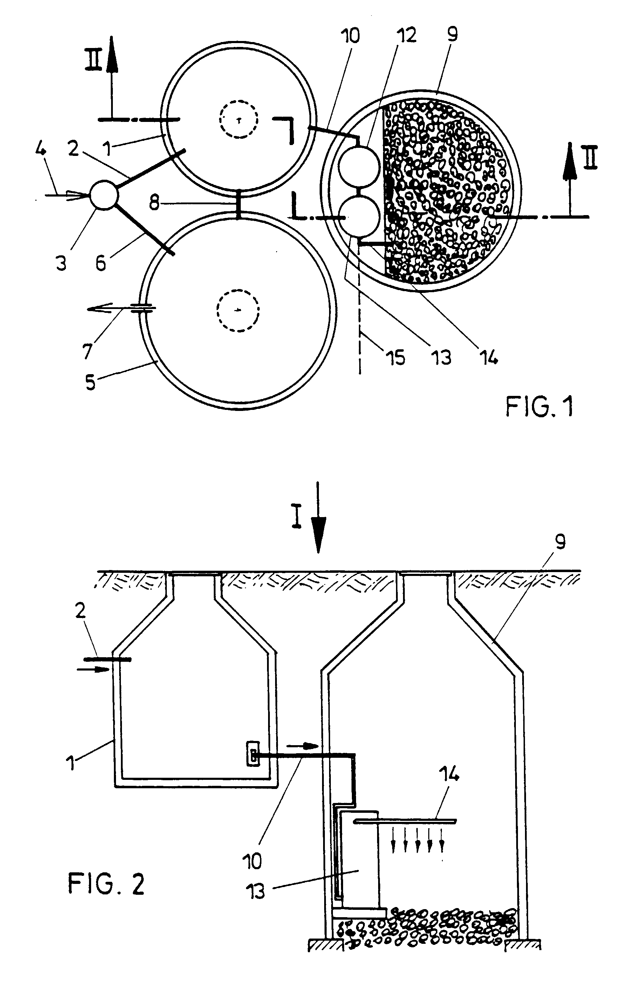

In den Fig. 1 und 2 ist schematisch mit 1 ein gegebenenfalls gleichzeitig als Abscheidungsstufe dienender Regenwasserpuffer bzw. Absetzbecken bezeichnet, welchem über eine Zuleitung 2 gegebenenfalls nach einer ersten mechanischen Vorreinigung in einem Filter 3 Regenwasser zugeführt wird, welches beispielsweise von einem Dach entsprechend dem Pfeil 4 zur ersten Filtereinheit 3 gelangt. Weiters ist neben dem Regenwasserpuffer 1 ein Regenwasserspeicher 5 vorgesehen, welchem über die Leitung 6 Regenwasser zugeführt werden kann, wobei entsprechend dem Pfeil 7 aus dem Regenwasserspeicher 5 Regenwasser für eine weitere Verwendung bzw. eine Brauchwasseraufbereitung abgezogen werden kann. Ein Not-Überlauf zwischen dem Regenwasserpuffer 1 und dem Regenwasserspeicher 5 ist mit 8 angedeutet.

Da Regenwasser unter Umständen einen unerwünscht hohen Anteil von Verunreinigungen bzw. schädlichen oder toxischen Stoffen aufweist, welche eine Beeinträchtigung des Grundwassers bei einer nachfolgenden Versickerung in einem mit 9 angedeuteten Sickerschacht bzw. einer Versickerungsanlage mit sich bringen kann, ist darüberhinaus vorgesehen, daß aus dem Regenwasserpuffer 1 über eine Leitung 10 abgezogenes Abwasser bei der in Fig. 1 dargestellten Ausführungsform einer oder mehreren hintereinander geschalteten Filter- und/oder Reinigungsstufen zugeführt wird, deren im wesentlichen senkrecht angeordnete Reinigungsbehälter mit 12 bzw. 13 bezeichnet sind. Aus Fig. 2 ist schematisch ersichtlich, daß eine Zufuhr des zu reinigenden Abwassers im Bereich des Bodens in das Innere des Reinigungsbehälters 13 erfolgt und gereinigtes bzw. gefiltertes Abwasser im oberen Bereich des Reinigungsbehälters über eine Leitung 14 abgezogen wird und einer Versickerung zugeführt wird. Selbstverständlich kann bei entsprechender Auslegung der Filter- und/oder Reinigungsstufe 12 bzw. 13 mit lediglich einer Filter- und/oder Reinigungsstufe das Auslangen gefunden werden, wobei derartige Filter- und/oder Reinigungseinheiten in den nachfolgenden Figuren detailliert dargestellt sind. Zusätzlich oder alternativ zu einer Versickerung kann das über die Leitung 14 aus der letzten Filter- und/oder Reinigungsstufe 13 ausgebrachte, gereinigte Abwasser einem Kanal oder auch unmittelbar einem Einsatz als Brauchwasser zugeführt werden, wie dies in Fig. 1 schematisch durch die strichlierte Leitung 15 angedeutet ist.

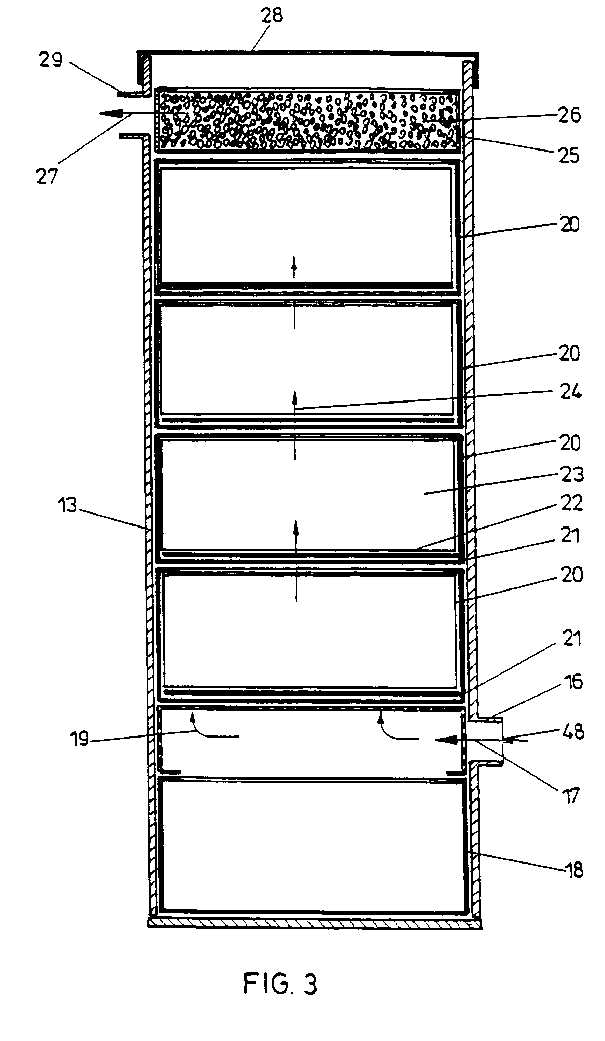

In Fig. 3 ist eine erste Ausführungsform einer Filter- und/ oder Reinigungsstufe dargestellt, wobei der im wesentlichen wiederum vertikal angeordnete Reinigungsbehälter mit 13 bezeichnet ist. In seinem unteren Bereich erfolgt über eine Zuführöffnung 16 entsprechend dem Pfeil 17 die Zufuhr von zu reinigendem Abwasser aus einer vorgeschalteten Filter- und/oder Reinigungsstufe oder unmittelbar beispielsweise aus dem Regenwasserpuffer 1, wobei im Bodenbereich des Reinigungsbehälters ein mit 18 angedeuteter Schlammfang vorgesehen ist. Im Bereich oberhalb des Schlammfanges 18 erfolgt eine wenigstens teilweise Umlenkung der Strömungsrichtung des Abwassers, wie dies durch den Pfeil 19 angedeutet ist.

In der in Fig. 3 dargestellten Ausführungsform sind im Reinigungsbehälter 13 eine Mehrzahl von jeweils mit 20 bezeichneten, modularen Einsätzen, welche beispielsweise aus einem entsprechenden Kunststoff oder einem Nirosta-Material ausgebildet sind, angeordnet. In den dargestellten vier Einsätzen 20, welche jeweils in ihrem Bodenbereich eine Sieb- oder Lochplatte 21 aufweisen, ist jeweils über einer Vliesschicht 22 körniges Adsorptionsmaterial 23, beispielsweise Aktivkohle, angeordnet, welche für einen besonders guten Reinigungs- oder Filtereffekt mit in der durch die Pfeile 24 angedeuteten Strömungsrichtung entgegen der Schwerkraft abnehmender Korngröße eingebracht ist. Es erfolgt somit neben einer Abscheidung von gegebenenfalls noch vorhandenen Feststoffteilchen im Bereich des Einlasses über dem Schlammfang 18 eine zunehmende Reinigung des durchtretenden Abwassers in den modular aufgebauten Einsätzen 20 und eine entsprechende Reduzierung des Anteils an unerwünschten Verunreinigungen, wie beispielsweise Schwermetallen, Nitraten, Keimen und anderen schädlichen bzw. toxischen Verunreinigungen.

Insbesondere bei Verwendung von körnigem Adsorptionsmaterial können unter Umständen Adsorptionsmaterialteilchen mitgerissen werden und zu einer Trübung des zu reinigenden Abwassers führen, sodaß in einem weiteren Einsatz 25 im Kopfbereich des Reinigungsbehälters 13 ein Sand- bzw. Kiesfilter 26 ausgebildet, aus welchem das gereinigte Abwasser entsprechend dem Pfeil 27 am Kopf des Reinigungsbehälters 13 über eine Abzugsöffnung 29 austritt und beispielsweise einer Versickerung oder einer nachgeschalteten Kanal anlage oder einer Brauchwasseranlage zugeführt wird.

Wie in Fig. 3 deutlich ersichtlich, ist der Reinigungsbehälter 13 mit einer abnehmbaren Abdeckung 28 ausgebildet, wodurch ermöglicht wird, nach Abnehmen der Abdeckung 28 die Einsätze 20, welche jeweils Filter- und/oder Reinigungsmaterial enthalten, zu entfernen. Durch die Modulbauweise der Einsätze 20, deren Kontur an die Innenkontur des Behälterinneren angepaßt ist, kann beispielsweise nach einer gewissen Einsatzdauer durch Entfernen des untersten Einsatzes 20, welcher entsprechend am meisten mit Verunreinigungen gesättigt ist und durch nachfolgendes Absenken der jeweils darüberliegenden Reinigungseinsätze 20 sowie dem Einsatz eines vollkommen frischen Einsatzes 20 im Kopfbereich wiederum für einen verhältnismäßig langen Zeitraum eine ausreichende Filter- und/oder Reinigungswirkung erzielt werden, da naturgemäß die weiter oben liegenden Einsätze gegenüber dem untersten Einsatz sehr viel weniger mit Verunreinigungen beaufschlagt bzw. gesättigt sind. Weiters kann eine Entnahmeöffnung im Bereich des Schlammfanges 18 vorgesehen sein, um bei entsprechender Abstützung der darüberliegenden Einsätze 20 bzw. 25 unabhängig von diesen eine einfache Entleerung des Schlammfanges 18 zu ermöglichen. Die Einsätze 20 können an ihrer Oberseite jeweils mit entsprechenden Halte- oder Greifvorrichtungen ausgebildet sein, um einfach und sicher aus dem Reinigungsbehälter 13 entnommen zu werden.

Es ist deutlich ersichtlich, daß bei dem in Fig. 3 gezeigten Reinigungsbehälter 13 durch eine Vielzahl von voneinander getrennten Reinigungs- und/oder Filtereinsätzen 20, in welchen jeweils an der Unterseite über einer Sieb- oder Lochplatte 21 eine Vliesschicht 22 als auch Adsorptionsmaterial 23 in körniger Form enthalten ist, eine entsprechende Reinigung bzw. Filterung und somit eine Reduzierung des Gehaltes an unerwünschten Verunreinigungen erzielbar ist.

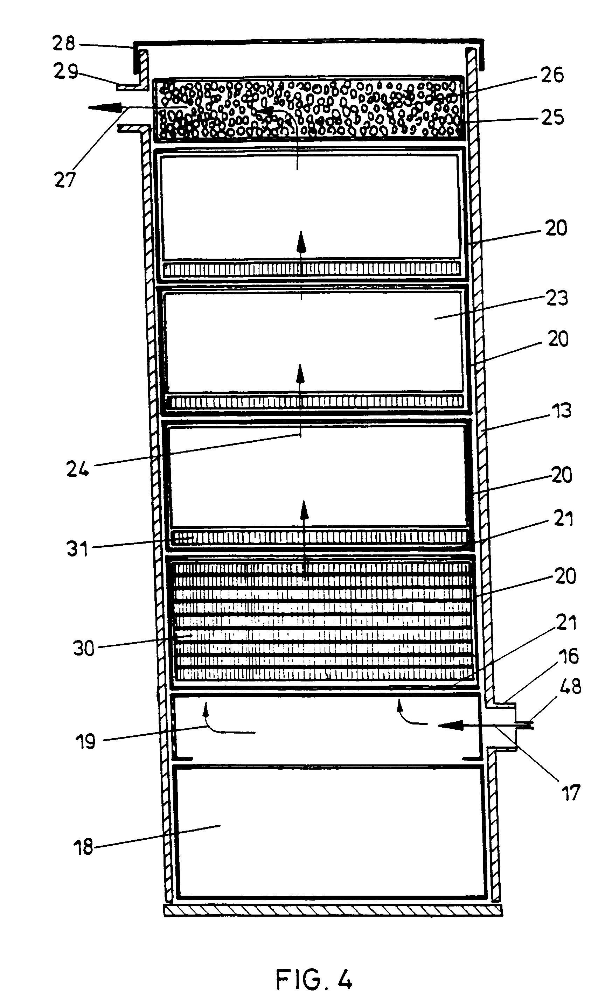

Bei der in Fig. 4 dargestellten Ausführungsform sind die Bezugszeichen der vorangehenden Figuren für gleiche Bauteile beibehalten worden. Nach einem Eintritt über die Zuführöffnung 16 ist unmittelbar über dem Schlammfang 18 in dem Reinigungsbehälter in einem ersten Einsatz 20 eine Vielzahl von Adsorptionsmaterial beinhaltende Matten 30 angeordnet, worauf in weiterer Folge ähnlich der vorangegangenen Ausführungsform wiederum eine Mehrzahl von Einsätzen 20 angeordnet ist, wobei über einer Sieb- oder Lochplatte 21 jeweils eine dünne Adsorptionsmaterial beinhaltende Matte oder ein Vlies 31 vorgesehen und daran anschließend eine Schüttung aus körnigem Adsorptionsmaterial 23 in den Einsätzen 20 enthalten ist. Unmittelbar vor dem Austritt aus dem Reinigungsbehälter 13 über die Abzugsöffnung 29 ist wieder ein Sand- bzw. Kiesfilter 26 vorgesehen.

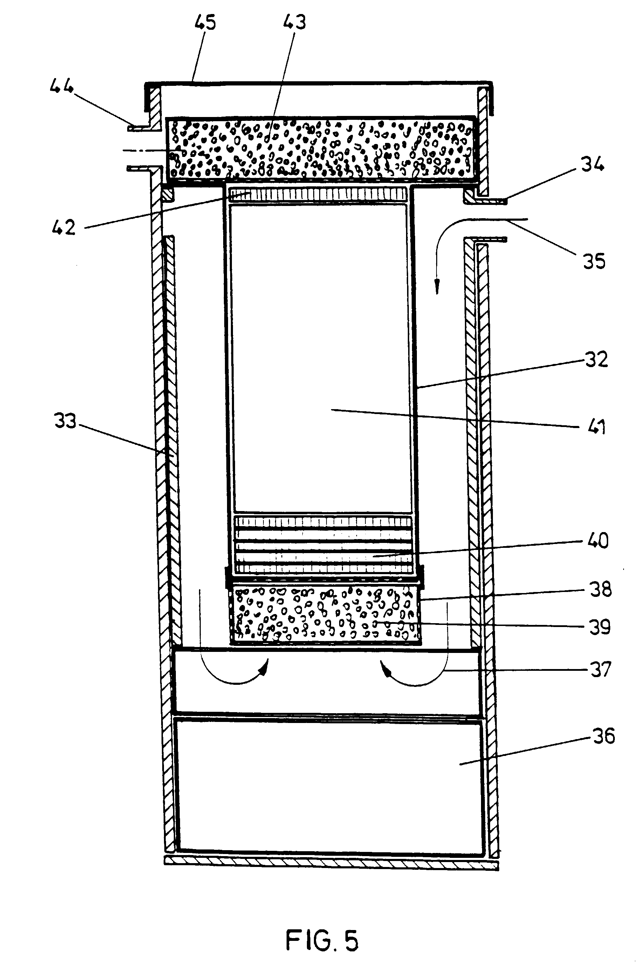

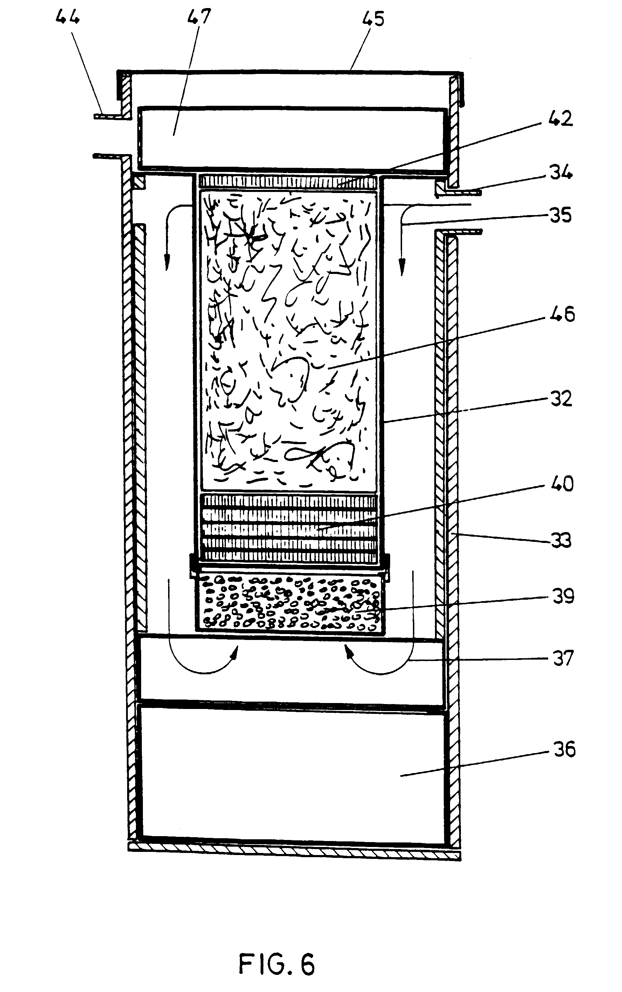

Bei den in den Fig. 5 und 6 dargestellten Ausführungsformen, welche beispielsweise für kleinere Anlagen eingesetzt oder auch als den in den Fig. 3 und 4 dargestellten Reinigungsbehältern 13 vorgeschaltete Reinigungs- und/oder Filterstufen ausgebildet sein können, ist in einem den effektiven Reinigungsbehälter 32 umgebenden Außenschacht bzw. Außenbehälter 33 eine Zuführöffnung 34 vorgesehen, wobei entsprechend dem Pfeil 35 das zugeführte, zu reinigende Abwasser an der Außenseite des Reinigungsbehälters 33 nach unten strömt und über einem Schlammfang 36 entsprechend an den Pfeilen 37 umgelenkt wird. Danach gelangt das zu reinigende Abwasser über den den gesamten Querschnitt des Reinigungsbehälters 32 bildenden Zutrittsquerschnitt an der Unterseite derselben über ein in einem Einsatz 38 enthaltenes Kiesfilter 39 und in weiterer Folge in der Ausführungsform gemäß Fig. 5 in ein von Adsorptionsmaterial beinhaltende Matten bzw. einem Vlies 40 gebildetes Ölabscheidefilter, woran wiederum eine Schüttung aus körnigem Adsorptionsmaterial 41, beispielsweise Aktivkohle, anschließt. Diese Schüttung 41 wird von einer Adsorptionsmaterial beinhaltenden Matte 42 abgedeckt, worauf wiederum in weiterer Folge ein Sand- bzw. Kiesfilter 43 ähnlich den vorausgegangenen Ausbildungen anschließt, und über eine Abzugsöffnung 44 im oberen Bereich das gereinigte Fluid ausgebracht wird. Der Außenbehälter 33 ist wiederum mit einer abnehmbaren Abdeckung 45 ausgebildet.

Bei der Ausbildungsform gemäß Fig. 6 ist nach den Adsorptionsmaterial beinhaltenden Matten 40 eine weitere Filterstufe 46 vorgesehen, wonach wiederum eine Adsorptionsmaterial beinhaltende Matte 42 anschließt und das Wasser aus einer Übergangskammer 47 beim Abzug 44 austritt.

Für eine einfache Regulierung des Durchflusses durch die einzelnen Filterstufen entgegen der Schwerkraft kann hiebei die Zuführöffnung 16 bzw. 34 mit einem veränderbaren, regulierbaren Querschnitt ausgebildet werden, wie dies in den Fig. 2 und 3 schematisch mit 48 angedeutet ist.

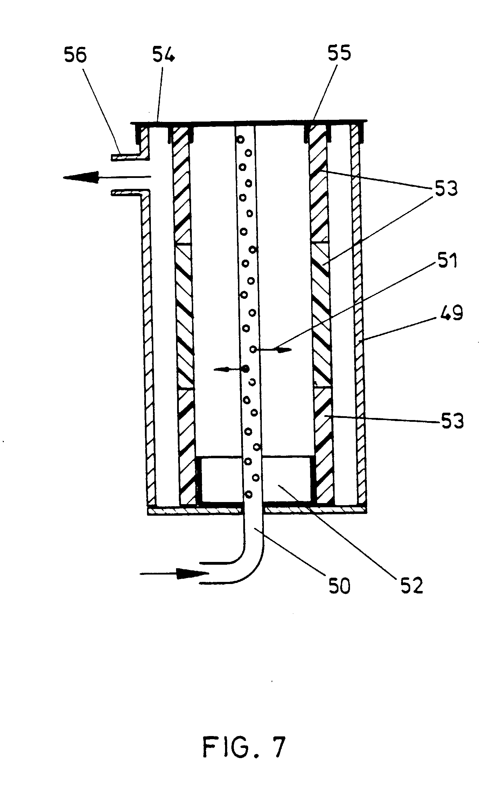

In Fig. 7 ist eine weitere abgewandelte Ausführungsform dargestellt, wobei in einen Reinigungsbehälter 49 im Bodenbereich mittig eine Zuführleitung 50 mündet, aus welcher das zu reinigende Abwasser im wesentlichen radial entsprechend den Pfeilen 51 in das Innere des Reinigungsbehälters 49 austritt. Die Zuführleitung 50 ist in ihrem Bodenbereich von einem Schlammfang 52 umgeben. Im wesentlichen konzentrisch zur Zuführleitung 50 sind ringförmige Einsätze 53 im Inneren des Reinigungsbehälters 49 angeordnet, wobei in den einzelnen ringförmigen Einsätzen 53 wiederum unterschiedliche Filter- und/oder Reinigungsmaterialien, beispielsweise eine Kombination von Vliesen und Adsorptionsmaterial, enthalten sind. Auch bei dieser Ausführungsform ist eine abnehmbare Abdeckung 54 vorgesehen, welche beispielsweise nach innen ragende Fortsätze 55 zur Positionierung der Einsätze 53 aufweist. Im Bereich des Kopfes des Reinigungsbehälters 49 erfolgt wiederum ein Abzug des entgegen der Schwerkraft geführte, gereinigten Abwassers über eine Abzugsöffnung 56.

Für einen einfachen Austausch der in den einzelnen Einsätzen 20, 25, 38, 53 enthaltenen Filtermaterialien können auch diese Einsätze einfacherweise beispielsweise mit einem abnehmbaren Deckel und/oder einer entsprechenden Entnahmeöffnung versehen sein.

## Patentansprüche

1. Verfahren zur mechanischen und adsorptiven Reinigung und gegebenenfalls Rückgewinnung von Abwässern, insbesondere Dachflächenwässern oder Regenwasser, wobei nach einem Abscheiden (1) von Feststoffen in einer tiefer liegenden Filter- und/oder Reinigungsstufe (12, 13, 32, 49) eine Reinigung von Abwässern vorgenommen wird, dadurch gekennzeichnet, daß in der Filter- und/oder Reinigungsstufe die zu behandelnden Abwässer durch einen im wesentlichen vertikal angeordneten Reingungsbehälter (12, 13, 32, 49) entgegen der Schwerkraft hindurchgeleitet werden, wobei die Zuführungsmengen der zu behandelnden Abwässer insbesondere geregelt bzw. gesteuert wird.

2. Vorrichtung zur mechanischen und adsorptiven Reinigung und gegebenenfalls Rückgewinnung von Abwässern, insbesondere Dachflächenwässern oder Regenwasser, wobei einer Abscheidungsstufe zum Abscheiden von Feststoffen, beispielsweise einem Absetzbecken (1), eine tiefer liegende Filter- und/ oder Reinigungsstufe nachgeschaltet ist, wobei die Filter- und/oder Reinigungsstufe von einem im wesentlichen vertikal verlaufenden Reinigungsbehälter (12, 13, 32, 49) gebildet ist, welcher in seinem Inneren wenigstens zwei voneinander getrennte Reinigungs- und/oder Filtereinrichtungen aufweist, dadurch gekennzeichnet, daß der insbesondere in einem Sickerschacht (9) oder dgl. angeordnete Reinigungsbehälter (12, 13, 32, 49) in seinem Bodenbereich eine Zuführöffnung (16, 37, 50) für das zu reinigende Abwasser und in seinem oberen Bereich eine Abzugsöffnung (29, 44, 56) für das gereinigte Abwasser aufweist.

3. Vorrichtung nach Anspruch 2, dadurch gekennzeichnet, daß im Bodenbereich des Reinigungsbehälters (13, 32, 49) ein Schlammfang (18, 36, 52) vorgesehen ist.

4. Vorrichtung nach Anspruch 2 oder 3, dadurch gekennzeichnet, daß im Bereich oberhalb des Schlammfanges (18, 36, 52) eine wenigstens teilweise Umkehr (19, 37) der Strömungsrichtung des zu reinigenden Abwassers erfolgt.

5. Vorrichtung nach Anspruch 2, 3 oder 4, dadurch gekennzeichnet, daß der Reinigungsbehälter (13, 33, 49) in seinem Bodenbereich eine verschließbare Öffnung zur Entleerung und/ oder zum Austausch des Schlammfanges (18, 36, 52) aufweist.

6. Vorrichtung nach einem der Ansprüche 2 bis 5, dadurch gekennzeichnet, daß die Zuführöffnung (16) mit einer Verschlußeinrichtung (48), beispielsweise einem Schieber oder Ventil, ausgebildet ist.

7. Vorrichtung nach einem der Ansprüche 2 bis 6, dadurch gekennzeichnet, daß der Durchtrittsquerschnitt der Zuführ- und/oder der Abzugsöffnung (16, 34, 50; 29, 44, 56) regulierbar bzw. veränderbar ausgebildet ist.

8. Vorrichtung nach einem der Ansprüche 2 bis 7, dadurch gekennzeichnet, daß als Filter- und/oder Reinigungsmittel Kies (26, 39), Adsorptionsmaterial, wie beispielsweise Aktivkohle (23, 30, 31, 40, 42), und/oder Vliese (22), insbesondere hydrophobe Kunststoffvliese, im Reinigungsbehälter (12, 13, 32, 49) enthalten sind.

9. Vorrichtung nach Anspruch 8, dadurch gekennzeichnet, daß Adsorptionsmaterial (23, 30, 31, 40, 42) in Form von Matten oder in körniger Form, insbesondere mit in Durchströmungsrichtung abnehmender oder gleichmäßiger Korngröße, welche zwischen Adsorptionsmaterial beinhaltenden Matten (31) oder Vliesschichten (22) eingebettet ist, als Filter- oder Reinigungsmittel eingesetzt ist, wobei vorzugsweise einem Filter aus Adsorptionsmaterial (23) in körniger Form wenigstens ein Sand- bzw. Kiesfilter (26) nachgeschaltet ist.

10. Vorrichtung nach einem der Ansprüche 2 bis 9, dadurch gekennzeichnet, daß die Reinigungs- und/oder Filtereinrichtungen von in den Reinigungsbehälter (13, 32, 49) einsetzbaren, austauschbaren Einsätzen (20, 25, 38, 53), welche Filter- und/oder Reinigungsmittel enthalten, gebildet sind.

11. Vorrichtung nach Anspruch 10, dadurch gekennzeichnet, daß die Einsätze (20, 25, 38) von wenigstens an der Unterseite mit Sieben oder gelochten Platten (21) ausgebildeten Einrichtungen gebildet sind, deren Außenkontur an die Innenkontur des Reinigungsbehälters (13, 32) angepaßt und abgedichtet ist und welche im Inneren wenigstens ein Filter- oder Reinigungsmittel enthalten.

12. Vorrichtung nach Anspruch 10, dadurch gekennzeichnet, daß die Einsätze (53) von ringförmigen Einrichtungen gebildet sind, welche ein in im Zentrum des Reinigungsbehälters (49) verlaufendes Zutrittsrohr (50), welches der Zufuhr des zu reinigenden Abwassers in das Innere des Reinigungsbehälters (49) dient, im wesentlichen konzentrisch umgeben und mit Durchtrittsöffnungen zum Durchleiten des Abwassers durch das im Inneren der Einsätze (53) enthaltene Filter- oder Reinigungsmittel ausgebildet sind.

13. Vorrichtung nach einem der Ansprüche 10 bis 12, dadurch gekennzeichnet, daß die Einsätze (20, 25, 38, 53) an ihrer Oberseite mit Greifeinrichtungen, wie beispielsweise Griffen, Haken oder Ösen, ausgebildet sind und daß die Einsätze (20, 25, 38, 53) vorzugsweise mit einem abnehmbaren Deckel und/oder einer Entnahmeöffnung für das darin enthaltene Filter- und/oder Reinigungsmittel ausgebildet sind.

14. Vorrichtung nach einem der Ansprüche 2 bis 13, dadurch gekennzeichnet, daß der Reinigungsbehälter (13, 32, 49) mit einer abnehmbaren Abdeckung (28, 45, 54) versehen ist.

15. Vorrichtung nach einem der Ansprüche 2 bis 14, dadurch gekennzeichnet, daß der Reinigungsbehälter (12, 13, 32, 49) mit einem vorgeschalteten Pufferspeicher bzw. Absetzbecken (1) gekoppelt ist und/oder daß eine Mehrzahl von Reinigungsbehältern (12, 13) hintereinander angeordnet ist.

16. Vorrichtung nach einem der Ansprüche 2 bis 15, dadurch gekennzeichnet, daß dem Reinigungsbehälter (13, 32, 49) eine Versickerungsanlage (9), ein Kanal oder ein Brauchwasserspeicher (15) nachgeschaltet ist.
